(19) Europäisches Patentamt
European Patent Office
Office européen des brevets

(11) EP 3 950 901 A1

(12) # EUROPEAN PATENT APPLICATION
published in accordance with Art. 153(4) EPC

(43) Date of publication:
**09.02.2022 Bulletin 2022/06**

(21) Application number: **19921757.1**

(22) Date of filing: **26.03.2019**

(51) International Patent Classification (IPC):
***C10M 169/04*** *(2006.01)* ***C10M 101/02*** *(2006.01)*
***C10M 105/32*** *(2006.01)* ***C10M 143/00*** *(2006.01)*
***C10M 171/02*** *(2006.01)* ***C10N 20/00*** *(2006.01)*
***C10N 20/02*** *(2006.01)* ***C10N 20/04*** *(2006.01)*
***C10N 30/02*** *(2006.01)* ***C10N 30/06*** *(2006.01)*
***C10N 30/10*** *(2006.01)* ***C10N 40/25*** *(2006.01)*

(52) Cooperative Patent Classification (CPC):
**C10M 101/02; C10M 105/32; C10M 143/00; C10M 169/04; C10M 171/02**

(86) International application number:
**PCT/JP2019/012998**

(87) International publication number:
**WO 2020/194543 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Mitsui Chemicals, Inc.**
**Tokyo 105-7122 (JP)**

(72) Inventor: **ABE Shota**
**Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(54) **LUBRICATING OIL COMPOSITION FOR INTERNAL COMBUSTION ENGINES AND METHOD FOR PRODUCING SAME**

(57) [Object]

To provide a lubricating oil composition for internal combustion engines having an excellent fluidity in a low-temperature environment, while maintaining high shear stability, having low agitation resistance in an engine, and further having excellent thermal and oxidation stability.

[Solution]

A lubricating oil composition for internal combustion engines, including a lubricant base oil and a liquid random copolymer of ethylene and an α-olefin, the liquid random copolymer being produced using a specific catalyst, wherein the lubricating oil composition has a kinematic viscosity at 100°C of 12.5 $mm^2/s$ or more, but less than 26.1 $mm^2/s$, and wherein the lubricant base oil consists of a mineral oil having a kinematic viscosity at 100°C of 2 to 10 $mm^2/s$, a viscosity index of 95 or more and a pour point of -10°C or lower, and/or a synthetic oil having a kinematic viscosity at 100°C of 1 to 10 $mm^2/s$, a viscosity index of 120 or more and a pour point of -30°C or lower.



Printed by Jouve, 75001 PARIS (FR)

## Description

Technical Field

The present invention relates to a lubricating oil composition for internal combustion engines and a method for producing the same, and particularly relates to a lubricating oil composition for high-output internal combustion engines and a process for producing the same.

Background Art

Petroleum products generally have the so-called viscosity temperature dependency, in which viscosity varies greatly with temperature change. For example, in lubricating oil and the like, which is used in automobiles etc., a small viscosity temperature dependency is preferred. Thus, in lubricating oil, certain types of polymers soluble in lubricating oil bases have been utilized as viscosity modifying agents (also called viscosity index improving agents), with the objective of reducing the viscosity temperature dependency. In recent years, OCPs (olefin copolymers) have been widely utilized as such viscosity modifying agents, and there have been a variety of improvements to OCP in order to further improve the performance of lubricating oil, as exemplified in Patent Literature 1.

Meanwhile, amidst the increased demands in recent years for a reduction in environmental burden, there is strong demand for improvements in the fuel consumption of internal combustion engines. Fuel consumption improvement technology of engine oil is one of such countermeasures, where the lowering of the viscosity of engine oil has been in progress, with the objective of reducing torque in regular automobiles by the lowered viscosity. However, since engine pistons and cranks bear huge loads in high-output type engines such as large displacement engines for construction machinery and heavy machinery, or crosshead type diesel engines oil for ocean vessels, a high viscosity engine oil of 40 or more according to the viscosity standard established by the SAE (Society of Automotive Engineers) as shown in Table 1 is often utilized with the objective of protecting these engine parts, and lowering the viscosity is difficult. Moreover, the engines of regular- and two-wheeled automobiles for racing, or the engines of large displacement two-wheeled automobiles such as large-sized two-wheelers are also used in a higher-revving domain, compared to that of regular automobiles and compact, mid-sized two-wheelers. Here, a high viscosity engine oil is utilized because the temperature of the engine oil becomes higher, which leads to viscosity reduction.

Viscosity index improving agents are utilized in engine oil so that the lubricating oil maintains an optimal viscosity at high temperatures. However, the molecular weight of general viscosity index improving agents used in engine oil for regular automobiles is comparatively high, and thus molecular cleaving occurs due to shear stress, which tends to cause viscosity reduction of the lubricating oil. It is thus particularly unsuitable to utilize general viscosity index improving agents in high viscosity engine oil used in the aforementioned harsh conditions. Therefore, viscosity modifying agents of comparatively low molecular weight are utilized. However, even though viscosity reduction due to shearing can be suppressed, the viscosity index improvement performance worsens. Thus, the viscosity temperature dependency increases, the fluidity of lubricating oil becomes poor under a low-temperature environment; specifically at 40°C or lower, and agitation resistance when starting an internal combustion engine becomes remarkably great compared to that of the engine oil for regular automobiles, all of which badly affects the fuel consumption of internal combustion engines.

Patent Literature 2 discloses a lubricating oil composition having a low temperature dependence of viscosity; namely, having an excellent fluidity at -40°C or lower, while maintaining high shear stability, and having low agitation resistance in an engine, which is suitably applicable to internal combustion engines, where the lubricating oil composition contains a specific lubricant base oil and a specific ethylene-$\alpha$-olefin copolymer.

Moreover, Patent Literature 3 describes a method for producing a liquid random copolymer of ethylene and $\alpha$-olefin, wherein further described is that this copolymer is useful as a lubricating oil.

Table 1

| Viscosity standard *1 | CCS Viscosity *2 | | MR viscosity *3 | | Kinematic viscosity at 100°C *4 | | HTHS viscosity *5 |
|---|---|---|---|---|---|---|---|
| | Measured temperature | Upper limit viscosity | Measured temperature | Upper limit viscosity | Lower limit viscosity | Upper limit viscosity | Lower limit viscosity |
| | °C | mPa·s | °C | mPa·s | $mm^2/s$ | $mm^2/s$ | mPa·s |
| 5W | 30 | 6,600 | 35 | 60,000 | 3.8 | | |
| 10W | - 25 | 7,000 | - 30 | 60,000 | 4.1 | | |
| 15 W | - 20 | 7,000 | - 25 | 60,000 | 5.6 | | |

(continued)

| Viscosity standard *1 | CCS Viscosity *2 | | MR viscosity *3 | | Kinematic viscosity at 100°C *4 | | HTHS viscosity *5 |
|---|---|---|---|---|---|---|---|
| | Measured temperature | Upper limit viscosity | Measured temperature | Upper limit viscosity | Lower limit viscosity | Upper limit viscosity | Lower limit viscosity |
| | °C | mPa·s | °C | mPa·s | $mm^2/s$ | $mm^2/s$ | mPa·s |
| 20 W | - 15 | 9,500 | - 20 | 60,000 | 5.6 | | |
| 25 W | - 10 | 13,000 | - 15 | 60,000 | 9.3 | | |
| 40 | Not prescribed | | | | 12.5 | < 16.3 | 3.5 *6 3.7 *7 |
| 50 | | | | | 16.3 | < 21.9 | 3.7 |
| 60 | | | | | 21.9 | < 26.1 | 3.7 |

*1: Gear oils which satisfy two viscosity standards in the table are described as multi-grade gear oil with both viscosity standards. For example, the description 5W-40 is indicated when the standards 5W and 40 in the table are satisfied.
*2: Measured in accordance with ASTM D5293
*3: Measured in accordance with ASTM D4684
*4: Measured in accordance with ASTM D445
*5: Measured in accordance with ASTM D4683
*6: For 5W-40 or 10W-40
*7: For any of 15W-40, 20W-40, 25W-40

Citation List

Patent Literature

Patent Literature 1: WO 00/034420 A1

Patent Literature 2: JP 2016-098342 A

Patent Literature 3: EP 2921509 A

Summary of Invention

Technical Problem

However, there was further room for improvement in conventional lubricating oil compositions, from the perspective of providing a lubricating oil composition for internal combustion engines having a low temperature dependence of viscosity; namely, having an excellent fluidity under a low-temperature environment, while maintaining high shear stability, having low agitation resistance in an engine, and further having excellent thermal and oxidation stability.

Solution to Problem

The present inventors keenly investigated the development of a lubricating oil composition having excellent performance, and as a result, discovered that the aforementioned problem can be solved with a lubricating oil composition which contains, with a specific lubricant base oil, an ethylene-$\alpha$-olefin copolymer prepared by means of a specific catalyst, and satisfies specific conditions, thus arriving at the perfection of the present invention. The present invention specifically mentions the below aspect.

[1] A lubricating oil composition for internal combustion engines, comprising a lubricant base oil, and a liquid random copolymer (C) of ethylene and $\alpha$-olefin,the liquid random copolymer (C) being prepared by the below method ($\alpha$), the lubricating oil composition having a kinematic viscosity at 100°C of 12.5 $mm^2/s$ or more, but less than 26.1 $mm^2/s$, wherein the lubricant base oil consists of a mineral oil (A) having the properties of the below (A1) to (A3), and/or a synthetic oil (B) having the properties of the below (B1) to (B3).

(A1) The mineral oil has a kinematic viscosity at 100°C of 2 to 10 $mm^2/s$.
(A2) The mineral oil has a viscosity index of 95 or more.
(A3) The mineral oil has a pour point of -10°C or lower.
(B1) The synthetic oil has a kinematic viscosity at 100°C of 1 to 10 $mm^2/s$.
(B2) The synthetic oil has a viscosity index of 120 or more.
(B3) The synthetic oil has a pour point of -30°C or lower.

(Method ($\alpha$))

A method ($\alpha$) for preparing a liquid random copolymer of ethylene and $\alpha$-olefin,comprising a step of carrying out solution polymerization of ethylene and $\alpha$-olefin having 3 to 20 carbon atoms, under a catalyst system comprising

(a) a bridged metallocene compound represented by the following Formula 1, and
(b) at least one compound selected from a group consisting of

(i) an organoaluminum oxy-compound, and
(ii) a compound which reacts with the bridged metallocene compound to form an ion pair.

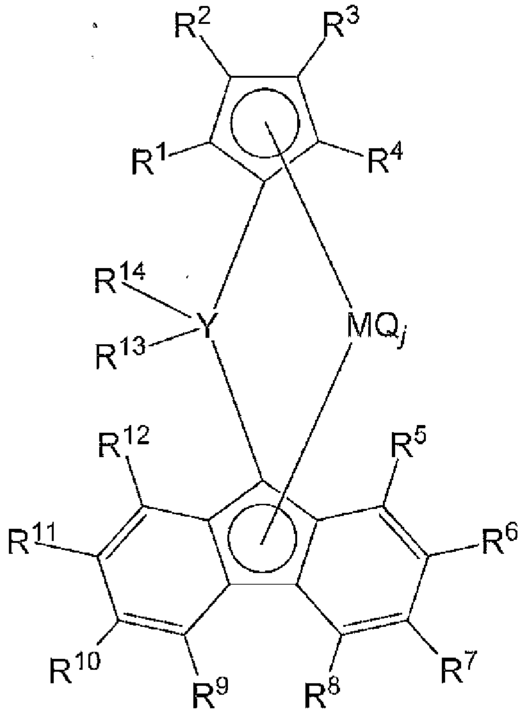

··· (Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,

$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;
$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

[2] The lubricating oil composition for internal combustion engines of the aforementioned [1], wherein in the metallocene compound represented by the above Formula 1, at least one among substituents ($R^1$, $R^2$, $R^3$ and $R^4$) bonded to a cyclopentadienyl group is a hydrocarbon group having 4 or more carbon atoms.

[3] The lubricating oil composition for internal combustion engines of the aforementioned [1] or [2], wherein $R^6$ and $R^{11}$, being the same, are hydrocarbon groups having 1 to 20 carbon atoms.

[4] The lubricating oil composition for internal combustion engines of any of the aforementioned [1] to [3], wherein in the metallocene compound represented by the above Formula 1, substituent ($R^2$ or $R^3$) bonded to the 3-position of the cyclopentadienyl group is a hydrocarbon group.

[5] The lubricating oil composition for internal combustion engines of the aforementioned [4], wherein in the metallocene compound represented by the above Formula 1, the hydrocarbon group ($R^2$ or $R^3$) bonded to the 3-position of the cyclopentadienyl group is an n-butyl group.

[6] The lubricating oil composition for internal combustion engines of any of the aforementioned [1] to [5], wherein in the metallocene compound represented by the above Formula 1, substituents ($R^6$ and $R^{11}$) bonded to the 2-position and 7-position of the fluorenyl group are all tert-butyl groups.

[7] The lubricating oil composition for internal combustion engines of any of the aforementioned [1] to [6], wherein the compound which reacts with the bridged metallocene compound to form an ion pair is a compound represented by the following Formula 6.

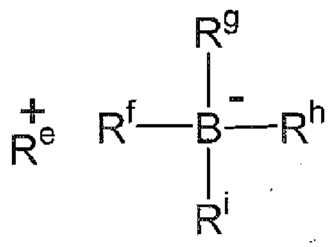

... (Formula 6)

[In Formula 6, $R^{e+}$ is $H^+$, a carbenium cation, an oxonium cation, an ammonium cation, a phosphonium cation, a cycloheptyltrienyl cation, or a ferrocenium cation having a transition metal, and $R^f$ to $R^i$ each is independently a hydrocarbon group having 1 to 20 carbon atoms.]

[8] The lubricating oil composition for internal combustion engines of the aforementioned [7], wherein the ammonium cation is a dimethylanilinium cation.

[9] The lubricating oil composition for internal combustion engines of the aforementioned [7] or [8], wherein the catalyst system further comprises an organoaluminum compound selected from a group consisting of trimethyl aluminum and triisobutyl aluminum.

[10] The lubricating oil composition for internal combustion engines of any of the aforementioned [1] to [9], wherein the $\alpha$-olefin of the liquid random copolymer (C) is propylene.

[11] A lubricating oil composition for internal combustion engines, comprising a lubricant base oil, and a liquid random copolymer of ethylene and $\alpha$-olefin,the liquid random copolymer having the properties of the below (C1) to (C5), the lubricating oil composition having a kinematic viscosity at 100°C of 12.5 $mm^2/s$ or more, but less than 26.1 $mm^2/s$, wherein the lubricant base oil consists of a mineral oil (A) having the properties of the below (A1) to (A3), and/or a synthetic oil (B) having the properties of the below (B1) to (B3).

(A1) The mineral oil has a kinematic viscosity at 100°C of 2 to 10 $mm^2/s$.
(A2) The mineral oil has a viscosity index of 95 or more.
(A3) The mineral oil has a pour point of -10°C or lower.
(B1) The synthetic oil has a kinematic viscosity at 100°C of 1 to 10 $mm^2/s$.
(B2) The synthetic oil has a viscosity index of 120 or more.
(B3) The synthetic oil has a pour point of -30°C or lower.
(C1) The liquid random copolymer comprises 40 to 60 mol% of ethylene units and 60 to 40 mol% of $\alpha$-olefin units having 3 to 20 carbon atoms.
(C2) The liquid random copolymer has a number average molecular weight (Mn) of 500 to 10,000 and a molecular weight distribution (Mw/Mn, Mw is the weight average molecular weight) of 3 or less, as measured by Gel Permeation Chromatography (GPC).
(C3) The liquid random copolymer has a kinematic viscosity at 100°C of 30 to 5,000 $mm^2/s$.
(C4) The liquid random copolymer has a pour point of 30 to -45°C.
(C5) The liquid random copolymer has a Bromine Number of 0.1 g / 100 g or less.

[12] The lubricating oil composition for internal combustion engines of any of the aforementioned [1] to [11], wherein the synthetic oil (B) contains an ester, and a synthetic oil other than ester.

[13] The lubricating oil composition for internal combustion engines of any of the aforementioned [1] to [12], having a total base value of at least 20 mg-KOH/g.

[14] A diesel engine oil, consisting of the lubricating oil composition for internal combustion engines of any of the aforementioned [1] to [13].

[15] A method for producing a lubricating oil composition for internal combustion engines, comprising the steps of:

preparing a liquid random copolymer (C) of ethylene and $\alpha$-olefin by the following method ($\alpha$); and
preparing a lubricating oil composition for internal combustion engines by mixing a lubricant base oil and the liquid random copolymer (C), the composition having a kinematic viscosity at 100°C of 12.5 $mm^2/s$ or more, but less than 26.1 $mm^2/s$,
wherein the lubricant base oil consists of a mineral oil (A) having the properties of the below (A1) to (A3), and/or a synthetic oil (B) having the properties of the below (B1) to (B3).
(A1) The mineral oil has a kinematic viscosity at 100°C of 2 to 10 $mm^2/s$.
(A2) The mineral oil has a viscosity index of 95 or more.
(A3) The mineral oil has a pour point of -10°C or lower.
(B1) The synthetic oil has a kinematic viscosity at 100°C of 1 to 10 $mm^2/s$.
(B2) The synthetic oil has a viscosity index of 120 or more.
(B3) The synthetic oil has a pour point of -30°C or lower.

(Method ($\alpha$))

A method ($\alpha$) for preparing a liquid random copolymer of ethylene and $\alpha$-olefin,comprising a step of carrying out solution polymerization of ethylene and $\alpha$-olefin having 3 to 20 carbon atoms, under a catalyst system comprising

(a) a bridged metallocene compound represented by the following Formula 1, and
(b) at least one compound selected from a group consisting of

(i) an organoaluminum oxy-compound, and
(ii) a compound which reacts with the bridged metallocene compound to form an ion pair.

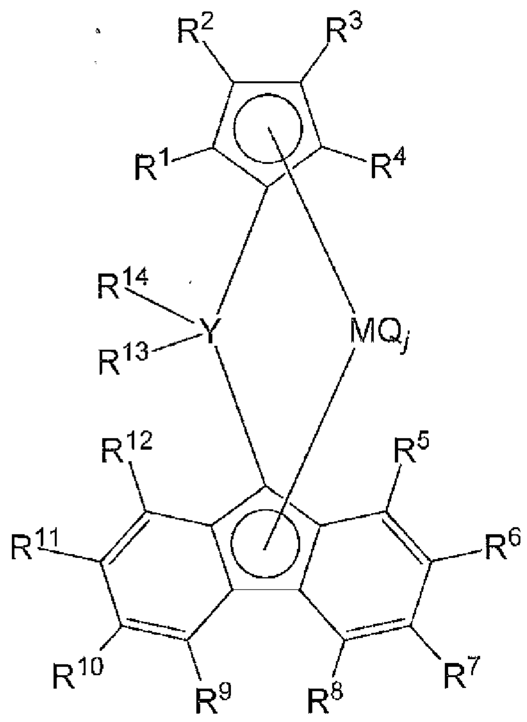

··· (Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a

ring structure,

$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;
$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

Advantageous Effects of Invention

The lubricating oil composition of the present invention maintains high shear stability, and exhibits remarkably excellent temperature viscosity properties and excellent low-temperature fluidity. The lubricating oil composition further has excellent thermal and oxidation stability, and contributes to better fuel efficiency of internal combustion engine oil.

Description of Embodiments

The lubricating oil composition for internal combustion engines according to the present invention (hereinafter, also referred to merely as "lubricating oil composition") will be explained in detail below.

The lubricating oil composition for internal combustion engines according to the present invention comprises a lubricant base oil, and a liquid random copolymer (C) of ethylene and α-olefin prepared by method (α) (may also be described in the present specification as "ethylene-α-olefin copolymer (C)"), the lubricating oil composition having a kinematic viscosity at 100°C of 12.5 $mm^2/s$ or more, but less than 26.1 $mm^2/s$, where the lubricant base oil consists of a mineral oil (A) and/or synthetic oil (B).

< Lubricant base oil >

In the lubricant base oil used in the present invention, performance and quality such as viscosity properties, heat resistance and oxidation stability, will differ depending on the producing and refining processes etc. of the lubricant base oil. The API (American Petroleum Institute) categorizes lubricant base oil into five types: Group I, II, III, IV and V. These API categories are defined in the API Publication 1509, 15th Edition, Appendix E, April 2002, and are as shown in Table 2.

Table 2

| Group | Type | Viscosity index *1 | Saturated hydrocarbon portion *2 (vol%) | Sulfur portion *3 (% by weight) |
|---|---|---|---|---|
| I | Mineral oil | 80 to 120 | < 90 | > 0.03 |
| II | Mineral oil | 80 to 120 | ≥ 90 | ≤ 0.03 |
| III | Mineral oil | ≥ 120 | ≥ 90 | ≤ 0.03 |
| IV | Poly-α-olefin | | | |
| V | Lubricant base material other than the aforementioned | | | |

*1: Measured in accordance with ASTM D445 (JIS K2283)
*2: Measured in accordance with ASTM D3238
*3: Measured in accordance with ASTM D4294 (JIS K2541)
*4: Mineral oils whose saturated hydrocarbon portion is less than 90 vol% and sulfur portion is less than 0.03% by weight, or whose saturated hydrocarbon portion is 90 vol% or more and sulfur portion exceeds 0.03% by weight, are included in Group I.

< Mineral oil (A) >

The mineral oil (A) has the properties of (A1) to (A3) below. The mineral oil (A) in the present invention is ascribed to Groups I to III of the aforementioned API categories.
(A1) The mineral oil has a kinematic viscosity at 100°C of 2 to 10 $mm^2/s$
The value of this kinematic viscosity is that as measured in accordance with the method described in JIS K2283. The kinematic viscosity at 100°C of mineral oil (A) is 2 to 10 $mm^2/s$, preferably 2.5 to 8 $mm^2/s$, and more preferably 3.5 to 6.5 $mm^2/s$. With a kinematic viscosity at 100°C in this range, the lubricating oil composition of the present invention is excellent in terms of volatility and temperature viscosity properties.

(A2) The mineral oil has a viscosity index of 95 or more

The value of this viscosity index is that as measured in accordance with the method described in JIS K2283. The viscosity index of mineral oil (A) is 95 or more, preferably 105 or more, and more preferably 120 or more. With a viscosity index in this range, the lubricating oil composition of the present invention has excellent temperature viscosity properties.

(A3) The mineral oil has a pour point of -10°C or lower

The value of this pour point is that as measured in accordance with the method described in ASTM D97. The pour point of mineral oil (A) is -10°C or lower, and preferably -12°C or lower. With a pour point in this range, the lubricating oil composition of the present invention has excellent low-temperature viscosity properties, when using the mineral oil (A) together with a pour point lowering agent.
The quality of the mineral oil is as mentioned above, where the aforementioned respective qualities of mineral oil are obtainable depending on the refining method. Exemplifications of the mineral oil (A) specifically include: a lubricant base oil, in which a lubricating oil fraction obtained by reduced pressure distillation of an atmospheric residue which is obtainable by the atmospheric distillation of crude oil, is refined by one or more treatments such as solvent deasphalting, solvent extraction, hydrocracking, solvent dewaxing, hydrorefining; or a lubricant base oil of wax isomerized mineral oil.
Moreover, a Gas-to-Liquid (GTL) base oil obtained by the Fisher-Tropsch method is a base oil which can also be suitably utilized as Group III mineral oil. Such GTL base oil is also handled as Group III+ lubricant base oil, which are described e.g. in the following Patent Literatures: EP0776959, EP0668342, WO97/21788, WO00/15736, WO00/14188, WO00/14187, WO00/14183, WO00/14179, WO00/08115, WO99/41332, EP1029029, WO01/18156 and WO01/57166.
In the lubricating oil composition of the present invention, the mineral oil (A) may be used alone as a lubricant base oil, or any mixture etc. of two or more lubricating oils selected from the synthetic oil (B) and the mineral oil (A) may be used as a lubricant base oil.

< Synthetic oil (B) >

The synthetic oil (B) has the characteristics of (B1) to (B3) below. The synthetic oil (B) in the present invention is ascribed to Group IV or Group V in the aforementioned API categories.

(B1) The synthetic oil has a kinematic viscosity at 100°C of 1 to 10 $mm^2/s$

The value of this kinematic viscosity is that as measured in accordance with the method described in JIS K2283. The kinematic viscosity at 100°C of synthetic oil (B) is 1 to 10 $mm^2/s$, preferably 2 to 8 $mm^2/s$, and more preferably 3.5 to 6 $mm^2/s$. With a kinematic viscosity at 100°C in this range, the lubricating oil composition of the present invention is excellent in terms of volatility and temperature viscosity properties.

(B2) The synthetic oil has a viscosity index of 120 or more

The value of this viscosity index is that as measured in accordance with the method described in JIS K2283. The viscosity index of synthetic oil (B) is 120 or more, and preferably 125 or more. With a viscosity index in this range, the lubricating oil composition of the present invention has excellent temperature viscosity properties.

(B3) The synthetic oil has a pour point of -30°C or lower

The value of this pour point is that as measured in accordance with the method described in ASTM D97. The

pour point of synthetic oil (B) is -30°C or lower, preferably -40°C or lower, more preferably -50°C or lower, and furthermore preferably -60°C or lower. With a pour point in this range, the lubricating oil composition of the present invention has excellent low-temperature viscosity properties.

Poly-α-olefins, which are ascribed to Group IV, can be obtained by oligomerizing higher α-olefins with an acid catalyst, as described in e.g. US Patent 3,780,128, US Patent 4,032,591, and JP H01-163136 A. Of these, a low molecular weight oligomer of at least one olefin selected from an olefin having 8 or more carbon atoms can be utilized as the poly-α-olefin. If utilizing a poly-α-olefin as the lubricant base oil, a lubricating oil composition having remarkably excellent temperature viscosity properties, low-temperature viscosity properties, as well as heat resistance is obtainable.

Poly-α-olefins are also industrially available, where those with a 100°C kinematic viscosity of 2 $mm^2/s$ to 10 $mm^2/s$ are commercially available. Examples include the NEXBASE 2000 series (made by NESTE), Spectrasyn (made by ExxonMobil Chemical), Durasyn (made by INEOS Oligomers), and Synfluid (made by Chevron Phillips Chemical).

As the synthetic oil ascribed to Group V, examples include alkyl benzenes, alkyl naphthalenes, isobutene oligomers and hydrides thereof, paraffins, polyoxy alkylene glycol, dialkyl diphenylether, polyphenylether, and esters.

Most of the alkyl benzenes and alkyl naphthalenes are usually dialkyl benzene or dialkyl naphthalene whose alkyl chain length has 6 to 14 carbon atoms, where such alkyl benzenes or alkyl naphthalenes are produced by the Friedel-Crafts alkylation reaction of benzene or naphthalene with olefin. In the production of alkyl benzenes or alkyl naphthalenes, the alkylated olefin to be utilized may be a linear or branched olefin, or may be a combination of these. These production processes are described in e.g. US Patent 3,909,432.

Moreover, as the ester, fatty acid esters are preferred from the perspective of compatibility with the ethylene-α-olefin copolymer (C).

Although there are no particular limitations on the fatty acid esters, examples include fatty acid esters consisting of only carbon, oxygen or hydrogen as mentioned below, where the examples include monoesters prepared from a monobasic acid and alcohol; diesters prepared from dibasic acid and alcohol, or from a diol with a monobasic acid or an acid mixture; or polyolesters prepared by reacting a monobasic acid or an acid mixture with a diol, triol (e.g. trimethylolpropane), tetraol (e.g. pentaerythritol), hexol (e.g. dipentaerythritol) etc. Examples of these esters include ditridecyl glutarate, di-2-ethyl hexyl adipate, diisodecyl adipate, ditridecyl adipate, di-2-ethyl hexyl sebacate, tridecyl pelargonate, di-2-ethyl hexyl adipate, di-2-ethyl hexyl azelate, trimethylolpropane caprylate, trimethylolpropane pelargonate, trimethylolpropane triheptanoate, pentaerythritol-2-ethyl hexanoate, pentaerythritol pelargonate, and pentaerythritol tetraheptanoate.

From the perspective of the compatibility with the ethylene-α-olefin copolymer (C), an alcohol having two or more functional hydroxyl groups is preferred as the alcohol moiety constituting the ester, and a fatty acid having 8 or more carbon atoms is preferred as the fatty acid moiety. However, a fatty acid having 20 or fewer carbon atoms, which is easily industrially available, is superior in terms of the manufacturing cost of the fatty acid. The effect of the present invention is also sufficiently exhibited with the use of one fatty acid constituting an ester, or with the use of a fatty acid ester prepared by means of two or more acid mixtures. Examples of fatty acid esters more specifically include a mixed triester of trimethylolpropane with lauric acid and stearic acid, and diisodecyl adipate, where these are preferable in terms of compatibility of saturated hydrocarbon components such as the ethylene-α-olefin copolymer (C), with antioxidants, corrosion preventing agents, anti-wear agents, friction modifying agents, pour point lowering agents, anti-rust agents and anti-foamers mentioned below and having a polar group.

When utilizing a synthetic oil (B), particularly a poly-α-olefin as a lubricant base oil, it is preferable that the lubricating oil composition of the present invention contain a fatty acid ester in an amount of 5 to 20% by mass with respect to 100% by mass of the entire weight of the lubricating oil composition. By containing a fatty acid ester of 5% by mass or more, good compatibility is obtainable with the lubricating oil sealing material such as resins and elastomers inside the internal combustion engines and industrial machinery of all types. Specifically, swelling of the lubricating oil sealing material can be suppressed. From the perspective of oxidation stability or heat resistance, the amount of ester is preferably 20% by mass or less. When mineral oil is contained in the lubricating oil composition, a fatty acid ester is not necessarily required, because the mineral oil *per* se has a swelling suppression effect of the lubricating oil sealing agent.

< (C) Ethylene-α-olefin copolymer >

The ethylene-α-olefin copolymer (C) is a liquid random copolymer (C) of ethylene and α-olefin prepared by the following method (α).

(Method (α))

A method (α) for preparing a liquid random copolymer of ethylene and α-olefin,comprising a step of carrying out solution polymerization of ethylene and α-olefin having 3 to 20 carbon atoms, under a catalyst system containing

(a) a bridged metallocene compound represented by the following Formula 1, and
(b) at least one compound selected from a group consisting of

(i) an organoaluminum oxy-compound, and
(ii) a compound which reacts with the bridged metallocene compound to form an ion pair.

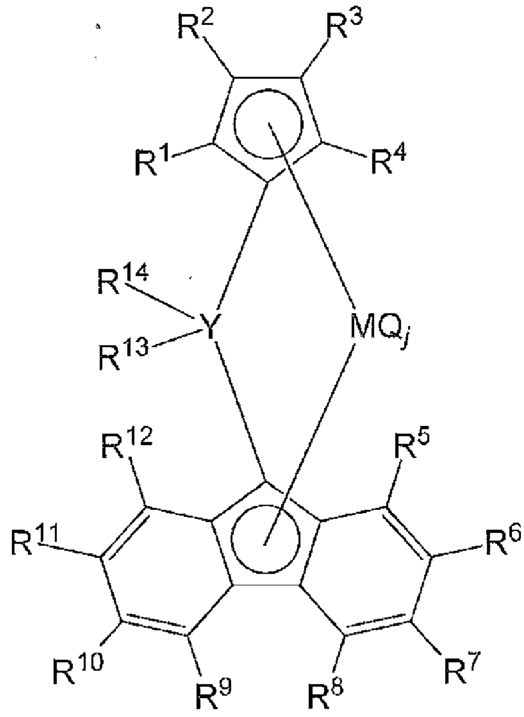

... (Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,

$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;
$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

Here, the hydrocarbon group has 1 to 20 carbon atoms, preferably 1 to 15 atoms, and more preferably 4 to 10 carbon atoms, and means for example an alkyl group, aryl group etc. The aryl group has 6 to 20 carbon atoms, and preferably 6 to 15 carbon atoms.
Examples of the silicon-containing hydrocarbon group include an alkyl or aryl group having 3 to 20 carbon atoms which contains 1 to 4 silicon atoms, and in more detail includes trimethylsilyl group, tert-butyldimethylsilyl group, triphenylsilyl group etc.
In the bridged metallocene compound represented by Formula 1, cyclopentadienyl group may be substituted or unsubstituted.
In the bridged metallocene compound represented by Formula 1,

(i) it is preferable that at least one among substituents ($R^1$, $R^2$, $R^3$ and $R^4$) bonded to cyclopentadienyl group is a hydrocarbon group,

(ii) it is more preferable that at least one among substituents ($R^1$, $R^2$, $R^3$ and $R^4$) is a hydrocarbon group having 4 or more carbon atoms,

(iii) it is most preferable that substituent ($R^2$ or $R^3$) bonded to the 3-position of the cyclopentadienyl group is a hydrocarbon group having 4 or more carbon atoms (for example an n-butyl group).

In case where at least two among $R^1$, $R^2$, $R^3$ and $R^4$ are substituents (that is, being not hydrogen atom), the above-mentioned substituents may be the same or be different, and it is preferable that at least one substituent is a hydrocarbon group having 4 or more carbon atoms.

In the metallocene compound represented by Formula 1, $R^6$ and $R^{11}$ bonded to fluorenyl group are the same, $R^7$ and $R^{10}$ are the same, but $R^6$, $R^7$, $R^{10}$ and $R^{11}$ are not hydrogen atom at the same time. In high-temperature solution polymerization of poly-$\alpha$-olefin, in order to improve the polymerization activity, preferably neither $R^6$ nor $R^{11}$ is hydrogen atom, and more preferably none of $R^6$, $R^7$, $R^{10}$ and $R^{11}$ is hydrogen atom. For example, $R^6$ and $R^{11}$ bonded to the 2-position and 7-position of the fluorenyl group are the same hydrocarbon group having 1 to 20 carbon atoms, and preferably all tert-butyl groups, and $R^7$ and $R^{10}$ are the same hydrocarbon group having 1 to 20 carbon atoms, and preferably all tert-butyl groups.

The main chain part (bonding part, Y) connecting the cyclopentadienyl group and the fluorenyl group is a cross-linking section of two covalent bonds comprising one carbon atom or silicon atom, as a structural bridge section imparting steric rigidity to the bridged metallocene compound represented by Formula 1. Cross-linking atom (Y) in the cross-linking section has two aryl groups ($R^{13}$ and $R^{14}$) which may be the same or different. Therefore, the cyclopentadienyl group and the fluorenyl group are bonded by the covalent bond cross-linking section containing an aryl group. Examples of the aryl group include a phenyl group, naphthyl group, anthracenyl group, and a substituted aryl group (which is formed by substituting one or more aromatic hydrogen ($sp^2$-type hydrogen) of a phenyl group, naphthyl group or anthracenyl group, with substituents). Examples of substituents in the aryl group include a hydrocarbon group having 1 to 20 carbon atoms, a silicon-containing hydrocarbon group having 1 to 20 carbon atoms, a halogen atom etc., and preferably include a phenyl group. In the bridged metallocene compound represented by Formula 1, preferably $R^{13}$ and $R^{14}$ are the same in view of easy production.

In the bridged metallocene compound represented by Formula 1, Q is preferably a halogen atom or hydrocarbon group having 1 to 10 carbon atoms. The halogen atom includes fluorine, chlorine, bromine or iodine. The hydrocarbon group having 1 to 10 carbon atoms includes methyl, ethyl, n-propyl, isopropyl, 2-methylpropyl, 1,1-dimethylpropyl, 2,2-dimethylpropyl, 1,1-diethylpropyl, 1-ethyl-1-methylpropyl, 1,1,2,2-tetramethylpropyl, sec-butyl, tert-butyl, 1,1-dimethylbutyl, 1,1,3-trimethylbutyl, neopentyl, cyclohexyl methyl, cyclohexyl, 1-methyl-1-cyclohexyl etc. Further, when j is an integer of 2 or more, Q may be the same or different.

Examples of such bridged metallocene compounds (a) include:

ethylene [$\eta^5$-(3-tert-butyl-5-methyl cyclopentadienyl)] ($\eta^5$-fluorenyl) zirconium dichloride, ethylene [$\eta^5$-(3-tert-butyl-5-methyl cyclopentadienyl)] [$\eta^5$-(3,6-di-tert-butyl fluorenyl)] zirconium dichloride, ethylene [$\eta^5$-(3-tert-butyl-5-methyl cyclopentadienyl)] [$\eta^5$-(2,7-di-tert-butyl fluorenyl)] zirconium dichloride, ethylene [$\eta^5$-(3-tert-butyl-5-methyl cyclopentadienyl)] (octamethyl octahydrodibenzofluorenyl) zirconium dichloride, ethylene [$\eta^5$-(3-tert-butyl-5-methyl cyclopentadienyl)] (benzofluorenyl) zirconium dichloride, ethylene [$\eta^5$-(3-tert-butyl-5-methyl cyclopentadienyl)] (dibenzofluorenyl) zirconium dichloride, ethylene [$\eta^5$-(3-tert-butyl-5-methyl cyclopentadienyl)] (octahydrodibenzofluorenyl) zirconium dichloride, ethylene [$\eta^5$-(3-tert-butyl-5-methyl cyclopentadienyl)] [$\eta^5$-(2,7-diphenyl-3,6-di-tert-butyl fluorenyl)] zirconium dichloride, ethylene [$\eta^5$-(3-tert-butyl-5-methyl cyclopentadienyl)] [$\eta^5$-(2,7-dimethyl-3,6-di-tert-butyl fluorenyl)] zirconium dichloride;

ethylene [$\eta^5$-(3-tert-butyl cyclopentadienyl)] ($\eta^5$-fluorenyl) zirconium dichloride, ethylene [$\eta^5$-(3-tert-butyl cyclopentadienyl)] [$\eta^5$-(3,6-di-tert-butyl fluorenyl)] zirconium dichloride, ethylene [$\eta^5$-(3-tert-butyl cyclopentadienyl)] [$\eta^5$-(2,7-di-tert-butyl fluorenyl)] zirconium dichloride, ethylene [$\eta^5$-(3-tert-butyl cyclopentadienyl)] (octamethyl octahydrodibenzofluorenyl) zirconium dichloride, ethylene [$\eta^5$-(3-tert-butyl cyclopentadienyl)] (benzofluorenyl) zirconium dichloride, ethylene [$\eta^5$-(3-tert-butyl cyclopentadienyl)] (dibenzofluorenyl) zirconium dichloride, ethylene [$\eta^5$-(3-tert-butyl cyclopentadienyl)] (octahydrodibenzofluorenyl) zirconium dichloride, ethylene [$\eta^5$-(3-tert-butyl cyclopentadienyl)] [$\eta^5$-(2,7-diphenyl-3,6-di-tert-butyl fluorenyl)] zirconium dichloride, ethylene [$\eta^5$-(3-tert-butyl cyclopentadienyl)] [$\eta^5$-(2,7-dimethyl-3,6-di-tert-butyl fluorenyl)] zirconium dichloride;

ethylene [$\eta^5$-(3-n-butyl cyclopentadienyl)] ($\eta^5$-fluorenyl) zirconium dichloride, ethylene [$\eta^5$-(3-n-butyl cyclopentadienyl)] [$\eta^5$-(3,6-di-tert-butyl fluorenyl)] zirconium dichloride, ethylene [$\eta^5$-(3-n-butyl cyclopentadienyl)] [$\eta^5$-(2,7-di-tert-butyl fluorenyl)] zirconium dichloride, ethylene [$\eta^5$-(3-n-butyl cyclopentadienyl)] (octamethyl octahydrodibenzofluorenyl) zirconium dichloride, ethylene [$\eta^5$-(3-n-butyl cyclopentadienyl)] (benzofluorenyl) zirconium dichloride, ethylene [$\eta^5$-(3-n-butyl cyclopentadienyl)] (dibenzofluorenyl) zirconium dichloride, ethylene [$\eta^5$-(3-n-butyl cyclopentadienyl)] (octahydrodibenzofluorenyl) zirconium dichloride, ethylene [$\eta^5$-(3-n-butyl cyclopentadienyl)] [$\eta^5$-(2,7-diphenyl-3,6-di-tert-butyl fluorenyl)] zirconium dichloride, ethylene [$\eta^5$-(3-n-butyl cyclopentadienyl)] [$\eta^5$-(2,7-dimethyl-3,6-di-tert-butyl fluorenyl)] zirconium dichloride;

diphenylmethylene [$\eta^5$-(3-tert-butyl-5-methyl cyclopentadienyl)] ($\eta^5$-fluorenyl) zirconium dichloride, diphenylmethylene [$\eta^5$-(3-tert-butyl-5-methyl cyclopentadienyl)] [$\eta^5$-(3,6-di-tert-butyl fluorenyl)] zirconium dichloride, diphenylmethylene [$\eta^5$-(3-tert-butyl-5-methyl cyclopentadienyl)] [$\eta^5$-(2,7-di-tert-butyl fluorenyl)] zirconium dichloride, diphenylmethylene [$\eta^5$-(3-tert-butyl-5-methyl cyclopentadienyl)] (octamethyl octahydrodibenzofluorenyl) zirconium dichloride, diphenylmethylene [$\eta^5$-(3-tert-butyl-5-methyl cyclopentadienyl)] (benzofluorenyl) zirconium dichloride, diphenylmethylene [$\eta^5$-(3-tert-butyl-5-methyl cyclopentadienyl)] (dibenzofluorenyl) zirconium dichloride, diphenylmethylene [$\eta^5$-(3-tert-butyl-5-methyl cyclopentadienyl)] (octahydrodibenzofluorenyl) zirconium dichloride, diphenylmethylene [$\eta^5$-(3-tert-butyl-5-methyl cyclopentadienyl)] [$\eta^5$- (2,7-diphenyl-3,6-di-tert-butyl fluorenyl)] zirconium dichloride, diphenylmethylene [$\eta^5$-(3-tert-butyl-5-methyl cyclopentadienyl)] [$\eta^5$-(2,7-dimethyl-3,6-di-tert-butyl fluorenyl)] zirconium dichloride;

diphenylmethylene [$\eta^5$-(3-tert-butyl cyclopentadienyl)] ($\eta^5$-fluorenyl) zirconium dichloride, diphenylmethylene [$\eta^5$-(3-tert-butyl cyclopentadienyl)] [$\eta^5$-(3,6-di-tert-butyl fluorenyl)] zirconium dichloride, diphenylmethylene [$\eta^5$-(3-tert-butyl cyclopentadienyl)] [$\eta^5$-(2,7-di-tert-butyl fluorenyl)] zirconium dichloride, diphenylmethylene [$\eta^5$-(3-tert-butyl cyclopentadienyl)] (octamethyl octahydrodibenzofluorenyl) zirconium dichloride, diphenylmethylene [$\eta^5$-(3-tert-butyl cyclopentadienyl)] (benzofluorenyl) zirconium dichloride, diphenylmethylene [$\eta^5$-(3-tert-butyl cyclopentadienyl)] (dibenzofluorenyl) zirconium dichloride, diphenylmethylene [$\eta^5$-(3-tert-butyl cyclopentadienyl)] (octahydrodibenzofluorenyl) zirconium dichloride, diphenylmethylene [$\eta^5$-(3-tert-butyl cyclopentadienyl)] [$\eta^5$-(2,7-diphenyl-3,6-di-tert-butyl fluorenyl)] zirconium dichloride, diphenylmethylene [$\eta^5$-(3-tert-butyl cyclopentadienyl)] [$\eta^5$-(2,7-dimethyl-3,6-di-tert-butyl fluorenyl)] zirconium dichloride;

diphenylmethylene [$\eta^5$-(3-n-butyl cyclopentadienyl)]($\eta^5$-fluorenyl) zirconium dichloride, diphenylmethylene [$\eta^5$-(3-n-butyl cyclopentadienyl)] [$\eta^5$-(3,6-di-tert-butyl fluorenyl)] zirconium dichloride, diphenylmethylene [$\eta^5$-(3-n-butyl cyclopentadienyl)] [$\eta^5$-(2,7-di-tert-butyl fluorenyl)] zirconium dichloride, diphenylmethylene [$\eta^5$-(3-n-butyl cyclopentadienyl)] (octamethyl octahydrodibenzofluorenyl) zirconium dichloride, diphenylmethylene [$\eta^5$-(3-n-butyl cyclopentadienyl)] (benzofluorenyl) zirconium dichloride, diphenylmethylene [$\eta^5$-(3-n-butyl cyclopentadienyl)] (dibenzofluorenyl) zirconium dichloride, diphenylmethylene [$\eta^5$-(3-n-butyl cyclopentadienyl)] (octahydrodibenzofluorenyl) zirconium dichloride, diphenylmethylene [$\eta^5$-(3-n-butyl cyclopentadienyl)] [$\eta^5$-(2,7-diphenyl-3,6-di-tert-butyl fluorenyl)] zirconium dichloride, diphenylmethylene [$\eta^5$-(3-n-butyl cyclopentadienyl)] [$\eta^5$-(2,7-dimethyl-3,6-di-tert-butyl fluorenyl)] zirconium dichloride;

di(p-tolyl) methylene [$\eta^5$-(3-tert-butyl-5-methyl cyclopentadienyl)] ($\eta^5$-fluorenyl) zirconium dichloride, di(p-tolyl) methylene [$\eta^5$-(3-tert-butyl-5-methyl cyclopentadienyl)] [$\eta^5$-(3,6-di-tert-butyl fluorenyl)] zirconium dichloride, di(p-tolyl) methylene [$\eta^5$-(3-tert-butyl-5-methyl cyclopentadienyl)] [$\eta^5$-(2,7-di-tert-butyl fluorenyl)] zirconium dichloride, di(p-tolyl) methylene [$\eta^5$-(3-tert-butyl-5-methyl cyclopentadienyl)] (octamethyl octahydrodibenzofluorenyl) zirconium dichloride, di(p-tolyl) methylene [$\eta^5$-(3-tert-butyl-5-methyl cyclopentadienyl)] (benzofluorenyl) zirconium dichloride, di(p-tolyl) methylene [$\eta^5$-(3-tert-butyl-5-methyl cyclopentadienyl)] (dibenzofluorenyl) zirconium dichloride, di(p-tolyl) methylene [$\eta^5$-(3-tert-butyl-5-methyl cyclopentadienyl)] (octahydrodibenzofluorenyl) zirconium dichloride, di(p-tolyl) methylene [$\eta^5$-(3-tert-butyl-5-methyl cyclopentadienyl)] [$\eta^5$-(2,7-diphenyl-3,6-di-tert-butyl fluorenyl)] zirconium dichloride, di(p-tolyl) methylene [$\eta^5$-(3-tert-butyl-5-methyl cyclopentadienyl)] [$\eta^5$-(2,7-dimethyl-3,6-di-tert-butyl fluorenyl)] zirconium dichloride;

di(p-tolyl) methylene [$\eta^5$-(3-tert-butyl cyclopentadienyl)] ($\eta^5$-fluorenyl) zirconium dichloride, di(p-tolyl) methylene [$\eta^5$-(3-tert-butyl cyclopentadienyl)] [$\eta^5$-(3,6-di-tert-butyl fluorenyl)] zirconium dichloride, di(p-tolyl) methylene [$\eta^5$-(3-tert-butyl cyclopentadienyl)] [$\eta^5$-(2,7-di-tert-butyl fluorenyl)] zirconium dichloride, di(p-tolyl) methylene [$\eta^5$-(3-tert-butyl cyclopentadienyl)] (octamethyl octahydrodibenzofluorenyl) zirconium dichloride, di(p-tolyl) methylene [$\eta^5$-(3-tert-butyl cyclopentadienyl)] (benzofluorenyl) zirconium dichloride, di(p-tolyl) methylene [$\eta^5$-(3-tert-butyl cyclopentadienyl)] (dibenzofluorenyl) zirconium dichloride, di(p-tolyl) methylene [$\eta^5$-(3-tert-butyl cyclopentadienyl)] (octahydrodibenzofluorenyl) zirconium dichloride, di(p-tolyl) methylene [$\eta^5$-(3-tert-butyl cyclopentadienyl)] [$\eta^5$-(2,7-diphenyl-3,6-di-tert-butyl fluorenyl)] zirconium dichloride, di(p-tolyl) methylene [$\eta^5$-(3-tert-butyl cyclopentadienyl)] [$\eta^5$-(2,7-dimethyl-3,6-di-tert-butyl fluorenyl)] zirconium dichloride; and

di(p-tolyl) methylene [$\eta^5$-(3-n-butyl cyclopentadienyl)] ($\eta^5$-fluorenyl) zirconium dichloride, di(p-tolyl) methylene [$\eta^5$-(3-n-butyl cyclopentadienyl)] [$\eta^5$-(3,6-di-tert-butyl fluorenyl)] zirconium dichloride, di(p-tolyl) methylene [$\eta^5$-(3-n-butyl cyclopentadienyl)] [$\eta^5$-(2,7-di-tert-butyl fluorenyl)] zirconium dichloride, di(p-tolyl) methylene [$\eta^5$-(3-n-butyl cyclopentadienyl)] (octamethyl octahydrodibenzofluorenyl) zirconium dichloride, di(p-tolyl) methylene [$\eta^5$-(3-n-butyl cyclopentadienyl)] (benzofluorenyl) zirconium dichloride, di(p-tolyl) methylene [$\eta^5$-(3-n-butyl cyclopentadienyl)] (dibenzofluorenyl) zirconium dichloride, di(p-tolyl) methylene [$\eta^5$-(3-n-butyl cyclopentadienyl)] (octahydrodibenzofluorenyl) zirconium dichloride, di(p-tolyl) methylene [$\eta^5$-(3-n-butyl cyclopentadienyl)] (2,7-diphenyl-3,6-di-tert-butyl fluorenyl) zirconium dichloride, di(p-tolyl) methylene [$\eta^5$-(3-n-butyl cyclopentadienyl)] [$\eta^5$-(2,7-dimethyl-3,6-di-tert-butyl fluorenyl)] zirconium dichloride.

Although compounds whose zirconium atoms were substituted with hafnium atoms, or compounds whose chloro ligands were substituted with methyl groups etc. are exemplified in these compounds, the bridged metallocene compound (a) is not limited to these exemplifications.

As the organoaluminum oxy-compound used in the catalyst system in the present invention, conventional aluminoxane can be used. For example, linear or ring type aluminoxane represented by the following Formulas 2 to 5 can be used. A small amount of organic aluminum compound may be contained in the organoaluminum oxy-compound.

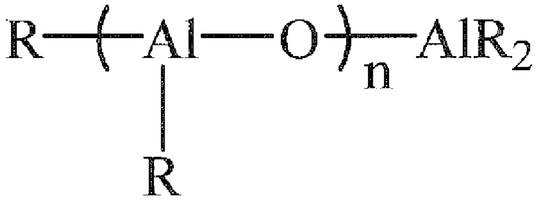
... (Formula 2)

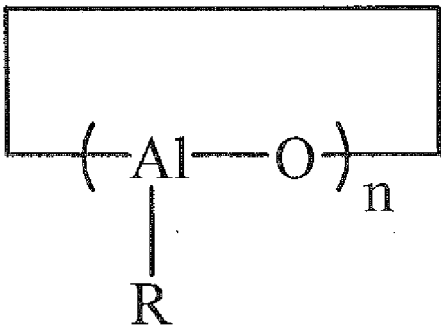
... (Formula 3)

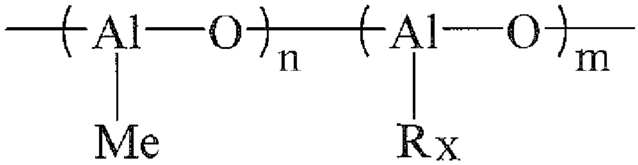
... (Formula 4)

In Formulae 2 to 4, R is independently a hydrocarbon group having 1 to 10 carbon atoms, Rx is independently a hydrocarbon group having 2 to 20 carbon atoms, m and n are independently an integer of 2 or more, preferably 3 or more, more preferably 10 to 70, and most preferably 10 to 50.

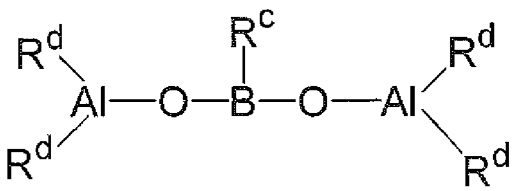
... (Formula 5)

In Formula 5, $R^c$ is a hydrocarbon group having 1 to 10 carbon atoms, and $R^d$ is independently a hydrogen atom, halogen atom or hydrocarbon group having 1 to 10 carbon atoms.

In Formula 2 or Formula 3, R is a methyl group (Me) of the organoaluminum oxy-compound which is conventionally referred to as "methylaluminoxane".

The methylaluminoxane is easily available and has high polymerization activity, and thus it is commonly used as an activator in the polyolefin polymerization. However, the methylaluminoxane is difficult to dissolve in a saturated hydrocarbon, and thus it has been used as a solution of aromatic hydrocarbon such as toluene or benzene, which is environmentally undesirable. Therefore, in recent years, a flexible body of methylaluminoxane represented by Formula 4 has been developed and used as an aluminoxane dissolved in the saturated hydrocarbon. The modified methylaluminoxane represented by Formula 4 is prepared by using a trimethyl aluminum and an alkyl aluminum other than the

trimethyl aluminum as shown in US Patent 4960878 and US Patent 5041584, and for example, is prepared by using trimethyl aluminum and triisobutyl aluminum. The aluminoxane in which Rx is an isobutyl group is commercially available under the trade name of MMAO and TMAO, in the form of a saturated hydrocarbon solution. (See Tosoh Finechem Corporation, Tosoh Research & Technology Review, Vol 47, 55 (2003)).

As (ii) the compound which reacts with the bridged metallocene compound to form an ion pair (hereinafter, referred to as "ionic compound" as required) which is contained in the present catalyst system, a Lewis acid, ionic compounds, borane, borane compounds and carborane compounds can be used. These are described in patent literatures, Korean Patent No. 10-551147, JP H01-501950 A, JP H03-179005 A, JP H03-179006 A, JP H03-207703 A, JP H03-207704 A, US Patent 5321106 and so on. If needed, heteropoly compounds, and isopoly compound etc. can be used, and the ionic compound disclosed in JP 2004-051676 A can be used. The ionic compound may be used alone or by mixing two or more. In more detail, examples of the Lewis acid include the compound represented by $BR_3$ (R is fluoride, substituted or unsubstituted alkyl group having 1 to 20 carbon atoms (methyl group, etc.), substituted or unsubstituted aryl group having 6 to 20 carbon atoms (phenyl group, etc.), and also includes for example, trifluoro boron, triphenyl boron, tris(4-fluorophenyl) boron, tris(3,5-difluorophenyl) boron, tris(4-fluorophenyl) boron, tris(pentafluorophenyl) and boron tris(p-tolyl) boron. When the ionic compound is used, its use amount and sludge amount produced are relatively small in comparison with the organoaluminum oxy-compound, and thus it is economically advantageous. In the present invention, it is preferable that the compound represented by the following Formula 6 is used as the ionic compound.

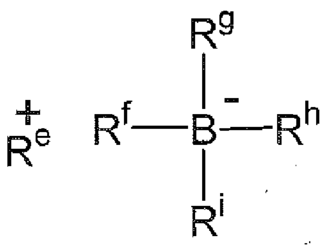

... (Formula 6)

In Formula 6, $R^{e+}$ is $H^+$, a carbenium cation, an oxonium cation, an ammonium cation, a phosphonium cation, a cycloheptyltrienyl cation, or a ferrocenium cation having a transition metal, and $R^f$ to $R^i$ each is independently an organic group, preferably a hydrocarbon group having 1 to 20 carbon atoms, and more preferably an aryl group, for example, a penta-fluorophenyl group. Examples of the carbenium cation include a tris(methylphenyl)carbenium cation and a tris(dimethylphenyl)carbenium cation, and examples of the ammonium cation include a dimethylanilinium cation.

Examples of compounds represented by the aforementioned Formula 6 preferably include N,N-dialkyl anilinium salts, and specifically include N,N-dimethylanilinium tetraphenylborate, N,N-dimethylanilinium tetrakis (pentafluorophenyl) borate, N,N-dimethylanilinium tetrakis (3,5-ditrifluoro methylphenyl) borate, N,N-diethyl anilinium tetraphenylborate, N,N-diethyl anilinium tetrakis (pentafluorophenyl) borate, N,N-diethyl anilinium tetrakis (3,5-ditrifluoro methylphenyl) borate, N,N-2,4,6-penta methylanilinium tetraphenylborate, and N,N-2,4,6-penta methylanilinium tetrakis (pentafluorophenyl) borate.

The catalyst system used in the present invention further includes (c) an organoaluminum compound when it is needed. The organoaluminum compound plays a role of activating the bridged metallocene compound, the organoaluminum oxy-compound, and the ionic compound, etc. As the organoaluminum compound, preferably an organoaluminum represented by the following Formula 7, and alkyl complex compounds of the Group 1 metal and aluminum represented by the following Formula 8 can be used.

$R^a_mAl(OR^b)_nH_pX_q$ ... Formula 7

In Formula 7, $R^a$ and $R^b$ each is independently a hydrocarbon group having 1 to 15 carbon atoms, preferably 1 to 4 carbon atoms, and X is a halogen atom, m is an integer of $0<m\leq3$, n is an integer of $0\leq n\leq3$, p is an integer of $0<p\leq3$, q is an integer of $0\leq q<3$, and $m+n+p+q=3$.

$M^2AlR^a_4$ ... Formula 8

In Formula 8, $M^2$ represents Li, Na or K, and $R^a$ is a hydrocarbon group having 1 to 15 carbon atoms, and preferably 1 to 4 carbon atoms.

Examples of the organoaluminum compound represented by Formula 7 include trimethyl aluminum and triisobutyl aluminum etc., which are easily available. Examples of the alkyl complex compounds of Group 1 metal and aluminum represented by Formula 8 include $LiAl(C_2H_5)_4$, $LiAl(C_7H_{15})_4$ etc. Compounds similar to the compounds represented by Formula 7 can be used. For example, like $(C_2H_5)_2AlN(C_2H_5)Al(C_2H_5)_2$, an organoaluminum compound to which at least 2 aluminum compounds are bonded through nitrogen atoms, can be used.

In the method for preparing the ethylene-α-olefin copolymer (C), the amount of (a) the bridged metallocene compound represented by Formula 1 is preferably 5 to 50% by weight with respect to total catalyst composition. Moreover, preferably the amount of (b) (i) the organoaluminum oxy-compound is 50 to 500 equivalent weight with respect to the molar number of the bridged metallocene compound to be used, the amount of (b) (ii) the compound which reacts with the bridged metallocene compound to form an ion pair is 1 to 5 equivalent weight with respect to the molar number of bridged metallocene compound to be used, and the amount of (c) the organoaluminum compound is 5 to 100 equivalent weight with respect to the molar number of the bridged metallocene compound to be used.

The catalyst system used in the present invention may have the following [1] to [4] for example.

[1] (a) the bridged metallocene compound represented by Formula 1, and (b) (i) the organoaluminum oxy-compound.
[2] (a) the bridged metallocene compound represented by Formula 1, (b) (i) the organoaluminum oxy-compound and (c) the organoaluminum compound.
[3] (a) the bridged metallocene compound represented by Formula 1, (b) (ii) the compound which reacts with the bridged metallocene compound to form an ion pair, and (c) the organoaluminum compound.
[4] (a) the bridged metallocene compound represented by Formula 1, and (b) (i) the organoaluminum oxy-compound and (ii) the compound which reacts with the bridged metallocene compound to form an ion pair.

(a) The bridged metallocene compound represented by Formula 1 (element (a)), (b) (i) the organoaluminum oxy-compound (element (b)), (ii) the compound which reacts with the bridged metallocene compound to form an ion pair and/or (c) the organoaluminum compound (element (c)) may be introduced in any order, to a starting raw material monomer (a mixture of ethylene and α-olefin having 3 to 20 carbon atoms). For example, elements (a), (b) and/or (c) are introduced alone or in any order, to a polymerization reactor with which raw material monomer is filled. Alternatively, if required, at least two elements among (a), (b) and/or (c) are mixed and then the mixed catalyst composition is introduced to the polymerization reactor with which raw material monomer is filled.

The ethylene-α-olefin copolymer (C) is prepared by a solution polymerization of ethylene and α-olefin having 3 to 20 carbon atoms under the catalyst system. As the α-olefin having 3 to 20 carbon atoms, one or more among linear α-olefins such as propylene, 1-butene, 1-penetene, 1-hexene etc., branched α-olefins such as isobutylene, 3-methyl-1-butene, 4-methyl-1-penetene etc. and mixtures thereof can be used. Preferably, one or more α-olefins having 3 to 6 carbon atoms can be used, and more preferably, propylene can be used. The solution polymerization can be carried out by using an inert solvent such as propane, butane or hexane etc. or an olefin monomer itself as a medium. In the copolymerization of ethylene and α-olefin of the present invention, the temperature for the copolymerization is conventionally 80 to 150°C and preferably 90 to 120°C, and the pressure for the copolymerization is conventionally atmospheric pressure to 500 $kgf/cm^2$ and preferably atmospheric pressure to 50 $kgf/cm^2$, which can vary in accordance with reacting materials, reacting conditions, etc.

Batch-, semi-continuous- or continuous-type polymerization can be carried out, and continuous-type polymerization is preferably carried out.

The ethylene-α-olefin copolymer (C) is in liquid phase at room temperature, and has a structure where the α-olefin units are uniformly distributed in the copolymer chain. The ethylene-α-olefin copolymer (C) comprises e.g. 60 to 40 mol%, preferably 45 to 55 mol%, of ethylene units derived from ethylene, and further comprises e.g. 40 to 60 mol%, preferably 45 to 55 mol%, of α-olefin units having 3 to 20 carbon atoms which are derived from α-olefin having 3 to 20 carbon atoms.

The number average molecular weight (Mn) of the ethylene-α-olefin copolymer (C) is e.g. 500 to 10,000 and preferably 800 to 6,000, and the molecular weight distribution (Mw/Mn, Mw is weight average molecular weight) is e.g. 3 or less and preferably 2 or less. The number average molecular weight (Mn) and the molecular weight distribution (Mw/Mn) are measured by gel permeation chromatography (GPC).

The ethylene-α-olefin copolymer (C) has a kinematic viscosity at 100°C of e.g. 30 to 5,000 and preferably 50 to 3,000 $mm^2/s$, a pour point of e.g. 30 to -45°C and preferably 20 to -35°C, and a Bromine Number of 0.1 / 100 g or less.

In the bridged metallocene compound represented by Formula 1, the polymerization activity is particularly high with respect to the copolymerization of ethylene with α-olefin. Utilizing this bridged metallocene compound selectively stops polymerization by hydrogen introduction at the molecular terminals, and thus there is little unsaturated bonding of the resulting ethylene-α-olefin copolymer (C). Moreover, since the ethylene-α-olefin copolymer (C) has a high random copolymerization, it has a controlled molecular weight distribution, and thus has excellent shear stability and viscosity properties. Therefore, it is considered that the lubricating oil composition for internal combustion engines of the present

invention containing the ethylene-α-olefin copolymer (C) maintains high shear stability, exhibits remarkably excellent temperature viscosity properties and excellent low-temperature fluidity, and further has excellent thermal and oxidation stability.

< Lubricating oil composition for internal combustion engines >

The lubricating oil composition for internal combustion engines according to the present invention contains a lubricant base oil consisting of the mineral oil (A) and/or synthetic oil (B), and contains the ethylene-α-olefin copolymer (C).

The lubricating oil composition for internal combustion engines according to the present invention has a kinematic viscosity at 100°C of 12.5 $mm^2/s$ or more, but less than 26.1 $mm^2/s$. The value of this kinematic viscosity is that when measured according to the method described in JIS K2283. If the kinematic viscosity at 100°C of the lubricating oil composition for internal combustion engines is much more than 26.1 $mm^2/s$, the agitation resistance of the lubricating oil increases in the internal combustion engine parts, and fuel efficiency performance worsens. If the kinematic viscosity at 100°C is much less than 12.5 $mm^2/s$, there is a possibility that metal contact may occur. The kinematic viscosity at 100°C is preferably 13.0 $mm^2/s$ or more, but less than 26.1 $mm^2/s$, more preferably 15.0 $mm^2/s$ or more, but less than 26.1 $mm^2/s$, and furthermore preferably 16.3 $mm^2/s$ or more, but less than 26.1 $mm^2/s$. Within this range, a high fuel efficiency performance is obtainable under a condition of maintaining good shear stability.

Furthermore, the reduction rate of the kinematic viscosity at 100°C of the lubricating oil composition for internal combustion engines of the present invention, after the 90-cycle Kurt Orbahn shear test in which a Bosch injector was employed in accordance with ASTM D6278, is usually less than 0.5%. That is, the lubricating oil composition for internal combustion engines of the present invention has a remarkably high shear stability. When the viscosity reduction rate in this test is less than 0.5%, this lubricating oil composition can be suitably utilized in high-output type engines such as large displacement engines for construction machinery and heavy machinery, or crosshead type diesel engines oil for ocean vessels, as well as in high-revving engines such as regular- and two-wheeled automobiles for racing, or in such engines of large displacement two-wheeled automobiles such as large-sized two-wheelers.

In the lubricating oil composition for internal combustion engines of the present invention, there is no particular limitation on the mixing ratio of the lubricant base oil consisting of the mineral oil (A) and/or synthetic oil (B) and the ethylene-α-olefin copolymer (C) if the required properties in the objective uses are satisfied. However, normally, the mass ratio of the lubricant base oil and the ethylene-α-olefin copolymer (C) (i.e. mass of lubricant base oil / mass of copolymer (C)) is 99/1 to 30/70.

Moreover, additives such as detergent dispersants, viscosity modifying agents, antioxidants, corrosion preventing agents, anti-wear agents, friction modifying agents, pour point lowering agents, anti-rust agents and anti-foamers may be contained in the lubricating oil composition for internal combustion engines of the present invention.

Below are exemplifications of additives which can be utilized in the lubricating oil composition of the present invention, where these can be used alone, or used in combination of two or more.

Exemplifications of the detergent dispersant include metal sulfonates, metal phenates, metal phosphonates, and imide succinate. Alkaline metal or alkaline earth metal salicylate-, phenate- or sulfonate- detergents are preferred in the lubricating oil composition of the present invention. Specific exemplifications include sulfonates; phenate; or salicylate of calcium or magnesium; imide succinate; and benzyl amine. The detergent dispersant may be used as required in a range of 0 to 18% by mass with respect to 100% by mass of the lubricating oil composition.

Detergent dispersants utilized in, in particular, high-output type engines for ocean vessels have a total base value 30 to 350 mg KOH/g as measured by the method described in ISO 3771, and are adjusted so that the detergent dispersants are in a range of 0.5 to 18% by mass with respect to 100% by mass of the lubricating oil composition, and so that the total base value of the lubricating oil composition is 20 mg KOH/g or more.

Known viscosity modifying agents such as methacrylate-based copolymers with a molecular weight of less than 50,000, liquid polybutene, and bright stock which is a mineral oil can be used together as the viscosity modifying agent. The viscosity modifying agent is utilized as required in a range of 0 to 50% by mass with respect to 100% by mass of the lubricating oil composition.

Examples of the antioxidant include phenol-based or amine-based compounds such as 2,6-di-t-butyl-4-methylphenol. The antioxidant may be used as required in a range of 0 to 3% by mass with respect to 100% by mass of the lubricating oil composition.

Examples of the corrosion preventing agent include compounds such as benzotriazole, benzoimidazole, and thiadiazole. The corrosion preventing agent may be used as required in a range of 0 to 3% by mass with respect to 100% by mass of the grease composition.

Exemplifications of the anti-wear agent include inorganic or organic molybdenum compounds such as molybdenum disulfide, graphite, antimony sulfide, and polytetrafluoroethylene. The anti-wear agent may be used as required in a range of 0 to 3% by mass with respect to 100% by mass of the lubricating oil composition.

Exemplifications of the friction modifying agent include amine compounds, imide compound, fatty acid esters,

fatty acid amides, and fatty acid metal salts having at least one alkyl group or alkenyl group having 6 to 30 carbon atoms, particularly linear alkyl groups or linear alkenyl groups having 6 to 30 carbon atoms, in a molecule.

Exemplifications of the amine compound include a linear- or branched-, preferably linear-, aliphatic monoamine, or a linear- or branched-, preferably linear-, aliphatic polyamine having 6 to 30 carbon atoms, or alkylene oxide adducts of these aliphatic amines. Examples of the imide compound include imide succinate with linear- or branched- alkyl group or alkenyl group having 6 to 30 carbon atoms and/or compounds thereof modified by a carboxylic acid, boric acid, phosphoric acid, sulfuric acid etc. Exemplifications of the fatty acid ester include esters of a linear- or branched-, preferably linear-, fatty acid having 7 to 31 carbon atoms with an aliphatic monohydric alcohol or aliphatic polyhydric alcohol. Exemplifications of the fatty acid amide include amides of a linear- or branched-, preferably linear-, fatty acid having 7 to 31 carbon atoms with an aliphatic monoamine or aliphatic polyamine. Examples of fatty acid metal salts include alkaline-earth metal salts (e.g. magnesium salts and calcium salts) and zinc salts of a linear- or branched-, preferably linear-, fatty acid having 7 to 31 carbon atoms.

The friction modifying agent may be used as required in a range of 0 to 5.0% by mass with respect to 100% by mass of the lubricating oil composition.

A variety of known pour point lowering agents may be used as the pour point lowering agent. Specifically, high molecular compounds containing an organic acid ester group may be used, and in particular, vinyl polymers containing an organic acid ester group are suitably used. Examples of the vinyl polymer containing an organic acid ester group include (co)polymers of methacrylic acid alkyl, (co)polymers of acrylic acid alkyl, (co)polymers of fumaric acid alkyl, (co)polymers of maleic acid alkyl, and alkylated naphthalene.

Such pour point lowering agents have a melting point of -13°C or lower, preferably -15°C, and furthermore preferably -17°C or lower. The melting point of the pour point lowering agent is measured by means of differential scanning calorimetry (DSC). Specifically, a sample of about 5 mg is packed into an aluminum pan and temperature is raised to 200°C, where the temperature is maintained at 200°C for 5 minutes. This is then cooled at 10°C/minute until reaching - 40°C, where the temperature is maintained at -40°C for 5 minutes. The temperature is then raised at 10°C/minute during which the melting point is obtained from the heat absorption curve.

The pour point lowering agent has a polystyrene conversion weight average molecular weight obtainable by gel permeation chromatography in the range of 20,000 to 400,000, preferably 30,000 to 300,000, more preferably 40,000 to 200,000.

The pour point lowering agent may be used as required in a range of 0 to 2% by mass with respect to 100% by mass of the lubricating oil composition.

Examples of the anti-rust agent include compounds such as amine compounds, carboxylic acid metal salts, polyhydric alcohol esters, phosphorus compounds, and sulfonates. The anti-rust agent may be used as required in a range of 0 to 3% by mass with respect to 100% by mass of the lubricating oil composition.

Exemplifications of the anti-foamer include silicone-based compounds such as dimethyl siloxane and silica gel dispersions, and alcohol- or ester-based compounds. The anti-foamer may be used as required in a range of 0 to 0.2% by mass with respect to 100% by mass of the lubricating oil composition.

In addition to the aforementioned additives, anti-emulsifying agents, coloring agents, oiliness agents (oiliness improving agents) and the like may also be used as required.

In the lubricating oil for internal combustion engines, the so-called DI package is industrially supplied, where in the DI package, all types of necessary additives are formulated for this use, and then concentrated and dissolved in lubricating oil such as mineral oil or synthetic hydrocarbon oil. Such a DI package can also be applied to the lubricating oil composition of the present invention.

## < Use >

The lubricating oil composition of the present invention can be suitably utilized in internal combustion engine oil with an SAE viscosity standard of 40 or more, and since high fluidity is obtainable at 40°C or lower while maintaining good shear stability, the lubricating oil composition of the present invention can be suitably utilized as fuel efficient engine oil in high-output type engines such as large displacement engines for construction machinery and heavy machinery, or crosshead type diesel engines oil for ocean vessels, as well as in high-revving engines such as regular- and two-wheeled automobiles for racing, or in such engines of large displacement two-wheeled automobiles such as large-sized two-wheelers.

## Examples

The present invention is further specifically explained based on the below Examples. However, the present invention is not limited to these Examples.

[Evaluation method]

In the below Examples and Comparative Examples etc., the physical properties etc. of the ethylene-α-olefin copolymer and the lubricating oil composition for internal combustion engine oil were measured by the below methods.

< Ethylene content (mol%) >

Using a Fourier transform infrared spectrometer FT/IR-610 or FT/IR-6100 (made by JASCO), the absorbance ratio of the absorption in the vicinity of 721 $cm^{-1}$ based on the horizontal vibration of the long chain methylene group, and the absorption in the vicinity of 1155 $cm^{-1}$ based on the skeletal vibration of propylene (D1155 $cm^{-1}$ / D721 $cm^{-1}$) was calculated, and the ethylene content (% by weight) was obtained by the calibration curve created beforehand (created using the ASTM D3900 reference sample). Using the ethylene content (% by weight) thus obtained, the ethylene content (mol%) was obtained according to the following Formula.

$$\text{Ethylene content (mol\%)} = \frac{[\text{ethylene content (\% by weight)} / 28]}{[\text{ethylene content (\% by weight)} / 28] + [\text{propylene content (\% by weight)} / 42]}$$

< B-value >

Employing o-dichloro benzene / benzene-$d_6$ (4/1 [vol/vol%]) as a measurement solvent, the $^{13}$C-NMR spectrum was measured under the measuring conditions (100 MHz, ECX 400P, made by JEOL Ltd) of temperature of 120°C, spectral width of 250 ppm, pulse repeating time of 5.5 seconds, and a pulse width of 4.7 μsec (45° pulse), or under the measuring conditions (125 MHz, AVANCE III Cryo-500 made by Bruker Biospin Inc) of temperature of 120°C, spectral width of 250 ppm, pulse repeating time of 5.5 seconds, and a pulse width of 5.0 μsec (45° pulse), and the B-value was calculated based on the following Formula [1].

$$B = \frac{P_{OE}}{2 P_O \cdot P_E} \quad \cdots [1]$$

In Formula [1], $P_E$ indicates the molar fraction contained in the ethylene component, Po indicates the molar fraction contained in the α-olefin component, and $P_{OE}$ indicates the molar fraction of the ethylene-α-olefin sequences of all dyad sequences.

< Molecular weight distribution >

Employing the HLC-8320 GPC (gel permeation chromatography) device produced by Tosoh Corporation, the molecular weight distribution was measured as below. Four TSK gel Super Multipore HZ-M columns were used as separation columns, the column temperature was 40°C, tetrahydrofuran (made by Wako Pure Chemical Industries) was used as the mobile phase, with a development rate of 0.35 ml/minute, a sample concentration of 5.5 g/L, a sample injection amount of 20 microliters, and a differential refractometer was used as a detector. PStQuick MP-M; made by Tosoh Corporation) was used as the reference polystyrene. In accordance with general-purpose calibration procedures, weight average molecular weight (Mw) and number average molecular weight (Mn) were calculated in terms of polystyrene molecular weight, and the molecular weight distribution (Mw/Mn) was calculated from those values.

< Viscosity properties >

The 100°C kinematic viscosity and the viscosity index was measured and calculated by the method described in JIS K2283.

< CCS viscosity >

The CCS viscosity was measured at -10°C, -15°C, -20°C, -25°C or -30°C by the method described in ASTM

D5293.

< Viscosity reduction rate after the shear test >

The Kurt Orbahn 90-cycle shear test was conducted employing a Bosch injector by the method described in ASTM D6278, and the 100°C kinematic viscosity reduction rate due to shearing, as represented in the below formula (shear test viscosity reduction rate), was evaluated.

$$\text{Shear test viscosity reduction rate (\%)} = (\text{100°C kinematic viscosity before shearing} - \text{100°C kinematic viscosity after shearing}) / \text{100°C kinematic viscosity before shearing} \times 100$$

< Thermal and oxidation stability >

Regarding thermal and oxidation stability, a test was conducted in accordance with the Oxidation Stability Test of Lubricating Oil for Internal Combustion Engines (ISOT) method described in JIS K2514, and the lacquer rating was evaluated 72 hours after the test time.

[Production of ethylene-α-olefin copolymer (C)]

Ethylene-α-olefin copolymers (C) were prepared in accordance with the Polymerization Examples below.

[Polymerization Example 1]

250 mL of heptane was charged into a glass polymerization vessel with a volume of 1 L sufficiently substituted with nitrogen, and the temperature in the system was raised to 50°C, and then 25 L/h of ethylene, 75 L/h of propylene, and 100 L/h of hydrogen were continuously supplied into the polymerization vessel, and stirred with a rotation of 600 rpm. Then, 0.2 mmol of triisobutyl aluminum was charged into the polymerization vessel, and 0.023 mmol of N,N-dimethylanilinium tetrakis (pentafluorophenyl) borate and 0.00230 mmol of diphenylmethylene [$\eta^5$-(3-n-butyl cyclopentadienyl)] [$\eta^5$-(2,7-di-tert-butyl fluorenyl)] zirconium dichloride, which were pre-mixed in toluene for 15 minutes or more, were charged into the polymerization vessel to start the polymerization. Ethylene, propylene and hydrogen were then continuously supplied, and polymerization took place at 50°C for 15 minutes. Polymerization was stopped by adding a small amount of isobutyl alcohol in the system, and the unreacted monomers were purged. The resulting polymer solution was washed 3 times with 100 mL of a 0.2 mol/L solution of hydrochloric acid, further washed 3 times with 100 mL of distilled water, dried with magnesium sulfate, and the solvent was then distilled off under reduced pressure. The resulting polymer was dried overnight at 80°C under reduced pressure to obtain 1.43 g of an ethylene-propylene copolymer. The resulting polymer had an ethylene content of 52.4 mol%, an Mw of 13,600, an Mw/Mn of 1.9, a B-value of 1.2, and a 100°C kinematic viscosity of 2,000 $mm^2/s$.

[Polymerization Example 2]

250 mL of heptane was charged into a glass polymerization vessel with a volume of 1 L sufficiently substituted with nitrogen, and the temperature in the system was raised to 50°C, and then 25 L/h of ethylene, 75 L/h of propylene, and 100 L/h of hydrogen were continuously supplied into the polymerization vessel, and stirred with a rotation of 600 rpm. Then, 0.2 mmol of triisobutyl aluminum was charged into a polymerization vessel, and 0.688 mmol of MMAO and 0.00230 mmol of dimethylsilyl bis(indenyl) zirconium dichloride, which were pre-mixed in toluene for 15 minutes or more, were charged into a polymerization vessel to start the polymerization. Ethylene, propylene and hydrogen were then continuously supplied, and polymerization took place at 50°C for 15 minutes. Polymerization was stopped by adding a small amount of isobutyl alcohol in the system, and the unreacted monomers were purged. The resulting polymer solution was washed 3 times with 100 mL of a 0.2 mol/L solution of hydrochloric acid, further washed 3 times with 100 mL of distilled water, dried with magnesium sulfate, and the solvent was then distilled off under reduced pressure. The resulting polymer was dried overnight at 80°C under reduced pressure to obtain 1.43 g of an ethylene-propylene copolymer. The

resulting polymer had an ethylene content of 52.1 mol%, an Mw of 13,800, an Mw/Mn of 2.0, a B-value of 1.2, and a 100°C kinematic viscosity of 2,000 $mm^2/s$.

The copolymer obtained by Polymerization Example 1, and the copolymer obtained by Polymerization Example 2, are respectively described below as Polymer 1 and Polymer 2.

[Preparation of lubricating oil composition for internal combustion engines]

The components used other than the ethylene-α-olefin copolymer (C) in the preparation of the below lubricating oil compositions are as follows.

Lubricant base oil; The below lubricant base oils were utilized as the Mineral oil (A).

Mineral oil - A: API Group I mineral oil with a 100°C kinematic viscosity of 6.8 $mm^2/s$, a viscosity index of 97, and a pour point -12.5°C (Super Oil N-46, made by JX Nippon Oil & Energy Corporation)
Mineral oil - B: API Group I mineral oil with a 100°C kinematic viscosity of 8.8 $mm^2/s$, a viscosity index of 101, and a pour point -12.5°C (Super Oil N-68, made by JX Nippon Oil & Energy Corporation)
Mineral oil - C: API Group I mineral oil with a 100°C kinematic viscosity of 5.3 $mm^2/s$, a viscosity index of 106, and a pour point -12.5°C (Super Oil N-32, made by JX Nippon Oil & Energy Corporation)
Mineral oil - D: API Group III mineral oil with a 100°C kinematic viscosity of 4.2 $mm^2/s$, a viscosity index of 122, and a pour point of -15°C (Yubase-4, made by SK Lubricants)
Mineral oil - E: API Group III mineral oil with a 100°C kinematic viscosity of 6.5 $mm^2/s$, a viscosity index of 131, and a pour point -12°C (Yubase-6, made by SK Lubricants) Synthetic oil (B); The below lubricant base oils were utilized as the Synthetic Oil (B).
Synthetic oil - A: a synthetic oil poly-α-olefin with a 100°C kinematic viscosity of 4.0 $mm^2/s$, a viscosity index of 123, and pour point of -60°C or lower (NEXBASE 2004, made by Neste)
Synthetic oil - B: a synthetic oil poly-α-olefin with a 100°C kinematic viscosity of 5.8 $mm^2/s$, a viscosity index of 138, and a pour point of -60°C or lower (NEXBASE 2006, made by Neste)
Synthetic oil - C: diisodecyl adipate, a fatty acid ester with a 100°C kinematic a viscosity of 3.7 $mm^2/s$, viscosity index of 156, and a pour point of -60°C or lower (made by Daihachi Chemical Industry Co. Ltd.)
DI package (DI); P-5202 made by Infineum
Pour point lowering agent (PPD);
IRGAFLO 720P made by BASF
Bright stock;
API Group I mineral oil with a 100°C kinematic viscosity of 29.9 $mm^2/s$, a viscosity index of 97, and a pour point -10.0°C (Bright Stock N460, made by JX Nippon Oil & Energy Corporation)

< Lubricating oil composition for internal combustion engines >

[Example 1]

Mineral oil-A and Mineral oil-B, which are the Mineral oil (A), was used as the lubricant base oil, and the copolymer obtained in Polymerization Example 1 (Polymer 1) was used as the ethylene-α-olefin copolymer (C). These were mixed together in the usual manner with the DI package (DI) and the pour point lowering agent (PPD), thereby preparing a lubricating oil composition for internal combustion engine oil. The addition amounts of the respective components and the physical properties etc. of the resulting lubricating oil compositions are as shown in Table 3.

[Examples 2 to 6, Comparative Examples 1 to 5]

Except for changing the types of components and addition amounts to those as described in Table 3, the lubricating oil compositions were prepared in the same way as in Example 1. The physical properties of the resulting lubricating oil compositions are as shown in Table 3.

Table 3

| | | Ex.1 | Ex.2 | Ex.3 | Ex.4 | Ex.5 | Ex.6 | Comp. ex.1 | Comp. ex. 2 | Comp. ex. 3 | Comp. ex. 4 | Comp. ex. 5 |
|---|---|---|---|---|---|---|---|---|---|---|---|---|
| Polymer 1 | %by mass | 4.0 | 5.0 | 9.0 | 8.0 | 12.0 | 14.0 | | | | | |
| Polymer 2 | %by mass | | | | | | | 4.0 | 5.0 | 9.0 | | |
| Bright stock | %by mass | | | | | | | | | | 26.5 | 44.2 |
| Mineral oil - A | %by mass | 54.9 | 54.3 | 51.7 | | | | 54.9 | 54.3 | 51.7 | 40.3 | 28.8 |
| Mineral oil - B | %by mass | 29.6 | 29.2 | 27.8 | | | | 29.6 | 29.2 | 27.8 | 21.7 | 15.5 |
| Mineral oil - C | %by mass | | | | 80.5 | 76.5 | 74.5 | | | | | |
| DI | %by mass | 11.0 | 11.0 | 11.0 | 11.0 | 11.0 | 11.0 | 11.0 | 11.0 | 11.0 | 11.0 | 11.0 |
| PPD | %by mass | 0.5 | 0.5 | 0.5 | 0.5 | 0.5 | 0.5 | 0.5 | 0.5 | 0.5 | 0.5 | 0.5 |
| 100°C kinematic viscosity | $mm^2/s$ | 16.2 | 17.7 | 24.6 | 15.1 | 21.3 | 25.5 | 16.3 | 17.5 | 24.4 | 15.4 | 19.0 103 |
| viscosity Viscosity index | - | 121 | 124 | 134 | 143 | 152 | 157 | 122 | 122 | 134 | 105 | 103 |
| -10°C CCS viscosity | mPa·s | 4,500 | 5,000 | 7,600 | 2,600 | 3,900 | 4,700 | | | | 6,200 | 11,000 23,000 |
| viscosity -15°C CCS viscosity | mPa·s | 8,600 | 9,300 | 14,000 | 4,200 | 6,500 | 8,200 | | | | 13,000 | 23,000 Adhered |
| viscosity ISOT | Varnish rating | Adhered substance (thin) | Adhered substance (thin) | Adhered substance (medium) | Adhered substance (medium) | Adhered substance (medium) | Adhered substance (medium) | Adhered substance (thick) | Adhered substance (thick) | Adhered substance (thick) | Adhered substance (thick) | Adhered substance (thick) |

[Example 7]

Mineral oil-D and Mineral oil-E, which are the Mineral oil (A), were used as the lubricant base oil, and polymer 1 was used as the ethylene-α-olefin copolymer (C). These were mixed together in the usual manner with the DI package (DI) and the pour point lowering agent (PPD), thereby preparing a lubricating oil composition for internal combustion engine oil. The addition amounts of the respective components and the physical properties etc. of the resulting lubricating oil compositions are as shown in Table 4.

[Example 8 to 15, Comparative Examples 6 to 8]

Except for changing the types of components and addition amounts to those as described in Table 4, the lubricating oil compositions for internal combustion engine oil were prepared in the same way as in Example 7. The physical properties etc. of the resulting lubricating oil compositions are as shown in Table 4.

Table 4

| | | Ex. 7 | Ex. 8 | Ex. 9 | Ex. 10 | Ex. 11 | Ex. 12 | Ex. 13 | Ex. 14 | Ex. 15 | Comp. ex. 6 | Comp. ex. 7 | Comp. ex. 8 |
|---|---|---|---|---|---|---|---|---|---|---|---|---|---|
| Polymer 1 | %by mass | 8.0 | 11.0 | 14.5 | 10.0 | 13.0 | 17.0 | 8.0 | 11.0 | 15.0 | | | |
| Polymer 2 | %by mass | | | | | | | | | | 8.0 | 10.0 | 8.0 |
| Mineral oil - D | %by mass | 48.3 | 46.5 | 44.4 | | | | | | | 48.3 | | |
| Mineral oil - E | %by mass | 32.2 | 31.0 | 29.6 | | | | | | | 32.2 | | |
| Synthetic oil - A | %by mass | | | | 59.0 | 56.0 | 52.0 | | | | | 59.0 | |
| Synthetic oil - B | %by mass | | | | | | | 61.0 | 58.0 | 54.0 | | | 61.0 |
| Synthetic oil - C | %by mass | | | | 20.0 | 20.0 | 20.0 | 20.0 | 20.0 | 20.0 | | 20.0 | 20.0 |
| DI | %by mass | 11.0 | 11.0 | 11.0 | 11.0 | 11.0 | 11.0 | 11.0 | 11.0 | 11.0 | 11.0 | 11.0 | 11.0 |
| PPD | %by mass | 0.5 | 0.5 | 0.5 | | | | | | | 0.5 | | |
| 100°C kinematic viscosity | $mm^2/s$ | 13.5 | 17.6 | 24.5 | 13.0 | 17.0 | 23.8 | 13.7 | 17.6 | 24.4 | 13.5 | 13.1 | 13.8 |
| Viscosity index | - | 161 | 165 | 168 | 172 | 178 | 189 | 164 | 169 | 173 | 160 | 172 | 165 |
| -15°CCCS viscosity | mPa·s | | | 4,920 | | | | | | 3,920 | | | |
| -20°CCCS viscosity | mPa·s | 3,750 | 5,990 | | | | 5,920 | | 4,830 | | | | |
| -25°CCCS viscosity | mPa·s | | | | | 6,160 | | 5,470 | | | | | |

(continued)

| | | Ex. 7 | Ex. 8 | Ex. 9 | Ex. 10 | Ex. 11 | Ex. 12 | Ex. 13 | Ex. 14 | Ex. 15 | Comp. ex. 6 | Comp. ex. 7 | Comp. ex. 8 |
|---|---|---|---|---|---|---|---|---|---|---|---|---|---|
| -30°CCCS viscosity | mPa·s | | | | 6,430 | | | | | | | | |
| Viscosity reduction rate after shear test | % | < 0.5 | < 0.5 | < 0.5 | < 0.5 | < 0.5 | < 0.5 | < 0.5 | < 0.5 | < 0.5 | | | |
| ISOT | Varnish rating | Adhered substance (thin) | Adhered substance (thin) | Adhered substance (thin) | Adhered substance (thin) | Adhered substance (thin) | Adhered substance (thin) | Adhered substance (thin) | Adhered substance (thin) | Adhered substance (thin) | Adhered substance (thick) | Adhered substance (thick) | Adhered substance (thick) |

## Claims

**1.** A lubricating oil composition for internal combustion engines, comprising a lubricant base oil, and a liquid random copolymer (C) of ethylene and α-olefin, the liquid random copolymer (C) being prepared by the below method (α), the lubricating oil composition having a kinematic viscosity at 100°C of 12.5 $mm^2/s$ or more, but less than 26.1 $mm^2/s$,

wherein the lubricant base oil consists of a mineral oil (A) having the properties of the below (Al) to (A3), and/or a synthetic oil (B) having the properties of the below (B1) to (B3).

(Al) The mineral oil has a kinematic viscosity at 100°C of 2 to 10 $mm^2/s$.
(A2) The mineral oil has a viscosity index of 95 or more.
(A3) The mineral oil has a pour point of -10°C or lower.
(B1) The synthetic oil has a kinematic viscosity at 100°C of 1 to 10 $mm^2/s$.
(B2) The synthetic oil has a viscosity index of 120 or more.
(B3) The synthetic oil has a pour point of -30°C or lower. (Method (α))

A method (α) for preparing a liquid random copolymer of ethylene and α-olefin, comprising a step of carrying out solution polymerization of ethylene and α-olefin having 3 to 20 carbon atoms, under a catalyst system comprising

(a) a bridged metallocene compound represented by the following Formula 1, and
(b) at least one compound selected from a group consisting of

(i) an organoaluminum oxy-compound, and
(ii) a compound which reacts with the bridged metallocene compound to form an ion pair.

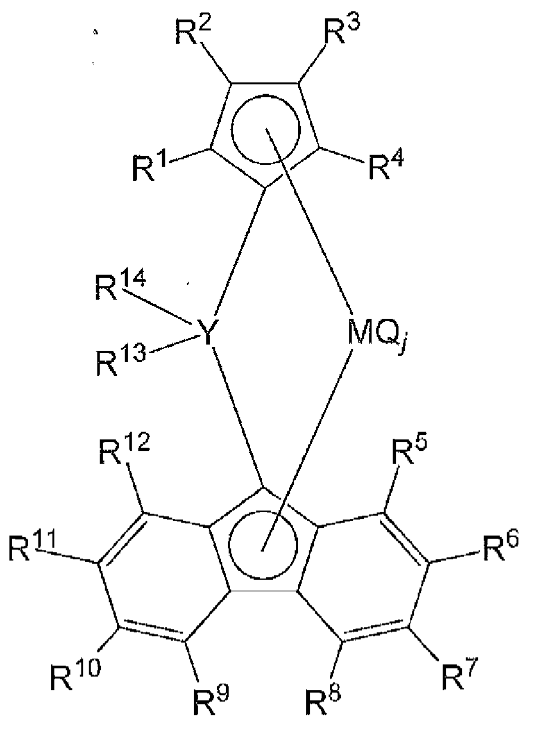

··· (Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,
$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;

Y is a carbon atom or silicon atom;
$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

2. The lubricating oil composition for internal combustion engines according to Claim 1, wherein in the metallocene compound represented by the above Formula 1, at least one among substituents ($R^1$, $R^2$, $R^3$ and $R^4$) bonded to a cyclopentadienyl group, is a hydrocarbon group having 4 or more carbon atoms.

3. The lubricating oil composition for internal combustion engines according to Claim 1 or 2, wherein $R^6$ and $R^{11}$, being the same, are hydrocarbon groups having 1 to 20 carbon atoms.

4. The lubricating oil composition for internal combustion engines according to any one of Claims 1 to 3, wherein in the metallocene compound represented by the above Formula 1, substituent ($R^2$ or $R^3$) bonded to the 3-position of the cyclopentadienyl group is a hydrocarbon group.

5. The lubricating oil composition for internal combustion engines according to Claim 4, wherein in the metallocene compound represented by the above Formula 1, the hydrocarbon group ($R^2$ or $R^3$) bonded to the 3-position of the cyclopentadienyl group is an n-butyl group.

6. The lubricating oil composition for internal combustion engines according to any one of Claims 1 to 5, wherein in the metallocene compound represented by the above Formula 1, substituents ($R^6$ and $R^{11}$) bonded to the 2-position and 7-position of the fluorenyl group are all tert-butyl groups.

7. The lubricating oil composition for internal combustion engines according to any one of Claims 1 to 6, wherein the compound which reacts with the bridged metallocene compound to form an ion pair is a compound represented by the following Formula 6.

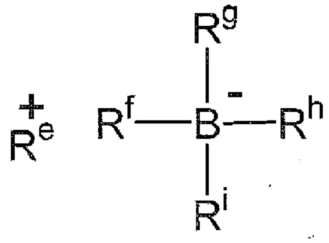

··· (Formula 6)

[In Formula 6, $R^{e+}$ is $H^+$, a carbenium cation, an oxonium cation, an ammonium cation, a phosphonium cation, a cycloheptyltrienyl cation, or a ferrocenium cation having a transition metal, and $R^f$ to $R^i$ each is independently a hydrocarbon group having 1 to 20 carbon atoms.]

8. The lubricating oil composition for internal combustion engines according to Claim 7, wherein the ammonium cation is a dimethylanilinium cation.

9. The lubricating oil composition for internal combustion engines according to Claim 7 or 8, wherein the catalyst system further comprises an organoaluminum compound selected from a group consisting of trimethyl aluminum and triisobutyl aluminum.

10. The lubricating oil composition for internal combustion engines according to any of Claims 1 to 9, wherein the α-olefin of the liquid random copolymer (C) is propylene.

11. A lubricating oil composition for internal combustion engines, comprising a lubricant base oil, and a liquid random copolymer of ethylene and α-olefin, the liquid random copolymer having the properties of the below (C1) to (C5), the lubricating oil composition having a kinematic viscosity at 100°C of 12.5 $mm^2/s$ or more, but less than 26.1 $mm^2/s$, wherein the lubricant base oil consists of a mineral oil (A) having the properties of the below (Al) to (A3), and/or a synthetic oil (B) having the properties of the below (B1) to (B3).

(Al) The mineral oil has a kinematic viscosity at 100°C of 2 to 10 $mm^2/s$.
(A2) The mineral oil has a viscosity index of 95 or more.
(A3) The mineral oil has a pour point of -10°C or lower.
(B1) The synthetic oil has a kinematic viscosity at 100°C of 1 to 10 $mm^2/s$.
(B2) The synthetic oil has a viscosity index of 120 or more.
(B3) The synthetic oil has a pour point of -30°C or lower.
(C1) The liquid random copolymer comprises 40 to 60 mol% of ethylene units and 60 to 40 mol% of $\alpha$-olefin units having 3 to 20 carbon atoms.
(C2) The liquid random copolymer has a number average molecular weight (Mn) of 500 to 10,000 and a molecular weight distribution (Mw/Mn, Mw is the weight average molecular weight) of 3 or less, as measured by Gel Permeation Chromatography (GPC).
(C3) The liquid random copolymer has a kinematic viscosity at 100°C of 30 to 5,000 $mm^2/s$.
(C4) The liquid random copolymer has a pour point of 30 to - 45°C.
(C5) The liquid random copolymer has a Bromine Number of 0.1 g / 100 g or less.

**12.** The lubricating oil composition for internal combustion engines according to any of Claims 1 to 11, wherein the synthetic oil (B) contains an ester, and a synthetic oil other than ester.

**13.** The lubricating oil composition for internal combustion engines according to any of Claims 1 to 12, having a total base value of at least 20 mg-KOH/g.

**14.** A diesel engine oil, consisting of the lubricating oil composition for internal combustion engines according to any of Claims 1 to 13.

**15.** A method for producing a lubricating oil composition for internal combustion engines, comprising the steps of:

preparing a liquid random copolymer (C) of ethylene and $\alpha$-olefin by the following method ($\alpha$); and
preparing a lubricating oil composition for internal combustion engines by mixing a lubricant base oil and the liquid random copolymer (C), the composition having a kinematic viscosity at 100°C of 12.5 $mm^2/s$ or more, but less than 26.1 $mm^2/s$,
wherein the lubricant base oil consists of a mineral oil (A) having the properties of the below (Al) to (A3), and/or a synthetic oil (B) having the properties of the below (B1) to (B3).

(Al) The mineral oil has a kinematic viscosity at 100°C of 2 to 10 $mm^2/s$.
(A2) The mineral oil has a viscosity index of 95 or more.
(A3) The mineral oil has a pour point of -10°C or lower.
(B1) The synthetic oil has a kinematic viscosity at 100°C of 1 to 10 $mm^2/s$.
(B2) The synthetic oil has a viscosity index of 120 or more.
(B3) The synthetic oil has a pour point of -30°C or lower. (Method ($\alpha$))

A method ($\alpha$) for preparing a liquid random copolymer of ethylene and $\alpha$-olefin, comprising a step of carrying out solution polymerization of ethylene and $\alpha$-olefin having 3 to 20 carbon atoms, under a catalyst system comprising

(a) a bridged metallocene compound represented by the following Formula 1, and
(b) at least one compound selected from a group consisting of

(i) an organoaluminum oxy-compound, and
(ii) a compound which reacts with the bridged metallocene compound to form an ion pair.

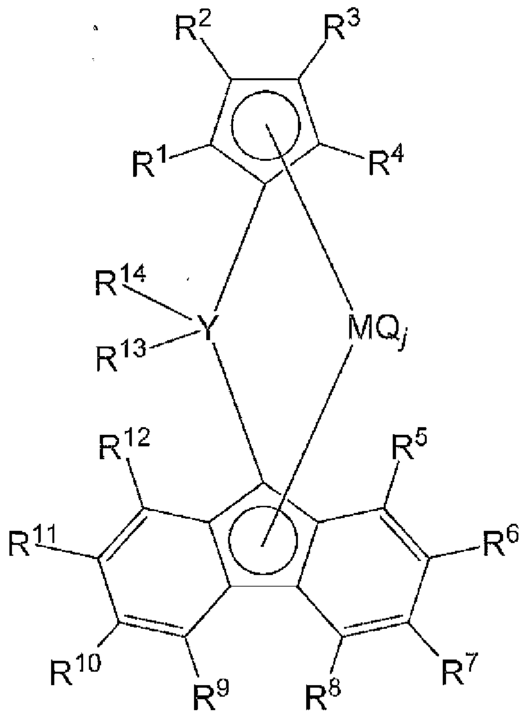

··· (Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,
$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;
$R^{13}$ and $R^{14}$ are independently aryl group;
M is Ti, Zr or Hf;
Q is independently halogen, hydrocarbon group, an anionic ligand or a neutral ligand which can be coordinated to a lone pair of electrons; and
j is an integer of 1 to 4.]

## INTERNATIONAL SEARCH REPORT

International application No. PCT/JP2019/012998

A. CLASSIFICATION OF SUBJECT MATTER
Int.Cl. C10M169/04(2006.01)i, C10M101/02(2006.01)i, C10M105/32(2006.01)i, C10M143/00(2006.01)i, C10M171/02(2006.01)i, C10N20/00(2006.01)n, C10N20/02(2006.01)n, C10N20/04(2006.01)n, C10N30/02(2006.01)n, C10N30/06(2006.01)n, C10N30/10(2006.01)n, C10N40/25(2006.01)n
According to International Patent Classification (IPC) or to both national classification and IPC

B. FIELDS SEARCHED
Minimum documentation searched (classification system followed by classification symbols)
Int.Cl. C10M169/04, C10M101/02, C10M105/32, C10M143/00, C10M171/02, C10N20/00, C10N20/02, C10N20/04, C10N30/02, C10N30/06, C10N30/10, C10N40/25

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2016-098342 A (MITSUI CHEMICALS, INC.) 30 May 2016, claims, paragraphs [0056]-[0078], [0093]-[0096], [0107]-[0118], [0130], [0181]-[0212], tables 3, 4 (Family: none) | 1-15<br>1-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>23.04.2019 | Date of mailing of the international search report<br>14.05.2019 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No. PCT/JP2019/012998

C (Continuation). DOCUMENTS CONSIDERED TO BE RELEVANT

| Category* | Citation of document, with indication, where appropriate, of the relevant passages | Relevant to claim No. |
|---|---|---|
| Y | US 2015/0266985 A1 (DAELIM INDUSTRIAL CO., LTD.) 24 September 2015, abstract, paragraphs [0010]-[0012], [0015]-[0019], [0041], [0051]-[0067], tables 1-4 & WO 2014/077617 A1 & EP 2921509 A1 & KR 10-1394943 B & CN 104797608 A & KR 10-1394943 B1 | 1-15 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 00034420 A1
- JP 2016098342 A
- EP 2921509 A
- EP 0776959 A
- EP 0668342 A
- WO 9721788 A
- WO 0015736 A
- WO 0014188 A
- WO 0014187 A
- WO 0014183 A
- WO 0014179 A
- WO 0008115 A
- WO 9941332 A
- EP 1029029 A
- WO 0118156 A
- WO 0157166 A
- US 3780128 A
- US 4032591 A
- JP H01163136 A
- US 3909432 A
- US 4960878 A
- US 5041584 A
- KR 10551147
- JP H01501950 A
- JP H03179005 A
- JP H03179006 A
- JP H03207703 A
- JP H03207704 A
- US 5321106 A
- JP 2004051676 A

### Non-patent literature cited in the description

- **APPENDIX E.** API Publication. April 2002, 1509
- Tosoh Research & Technology Review. Tosoh Finechem Corporation, 2003, vol. 47, 55